# EUROPEAN PATENT APPLICATION

(11) **EP 1 832 498 A2**
(43) Date of publication of application: **12.09.2007**
(21) Application number: 06020793.3
(22) Date of filing: 04.10.2006
(51) Int. Cl.: B62D 21/12

(54) **Transport vehicle chassis**

(30) Priority: 10.03.2006 ES 200600562 U
(71) Applicant: Miro Bravo, Vicente, 03801 Alcoy (Alicante) (ES)
(72) Inventor: Miro Bravo, Vicente, 03801 Alcoy (Alicante) (ES)
(74) Representative: Isern-Jara, Nuria

(57) **Abstract**

A transport vehicle chassis made up of a metallic structure (1) supporting an upper container or body, said structure being formed by two long spars (2) separated from each other, between which there are a plurality of crossbars (3) located transversally and in the same horizontal plane of the spars (2), being the fixing between the spars and the plurality of crossbars made by means of bolts (8), the inner face of each one of the long spars (2) having been fitted with tabs (4) bent at a right angle to the spars (2) having openings by means of which the bolt elements are fitted, allowing the coupling of the crossbars (3) and the long spars (2). The crossbars (3) are made from a galvanised sheet material and include steel strips (6) in the upper part onto which the container rests, said strips (6) having a 'U' shaped section in which the grooved section has a width corresponding to that of the spar (2).

## Description

### OBJECT OF THE INVENTION

The object of the present Utility Model is a transport vehicle chassis that incorporates noticeable innovations and advantages compared to the present known chassis structures.

More specifically it refers to a versatile chassis for transport vehicles that is built from a metallic structure that supports an upper container, said structure being formed by two long spars separated from each other at a specific distance determined by the needs of each vehicle, between which there are a plurality of crossbars located transversally to the long spars.

### BACKGROUND TO THE INVENTION

Nowadays, the greater majority of chassis used for transport vehicles are basically constructed from a metallic structure that rests on the vehicle frame and supports a container on top, such as a refrigerated container. Said metallic structure is normally formed by a pair of long spars separated from each other at a specific distance determined by the needs of each vehicle, between which there are a plurality of crossbars located transversally and the joining of which is made by means of weld beads.

However, this type of present arrangement has the disadvantage that due to the welded joint between the long spars and the crossbars, in the chassis manufacturing process, said elements must be given special surface treatments such as painting and, on the other hand, the transport of the chassis from the manufacturing site to the place of its destination takes up a lot more space in such a way that it requires special means of transport as the entire assembly is already fixed together without the possibility of dismantling because of the welded joints.

### DESCRIPTION OF THE INVENTION

This present invention has been developed for the purpose of providing a transport vehicle chassis that solves the above mentioned disadvantages, in addition to contributing additional advantages that will be clear from the description that is included below.

The transport vehicle chassis of the present invention is of the type that is made up of a metallic structure that supports an upper container, said structure being formed by a pair of long spars arranged longitudinally and separated from each other at a specific distance that can vary depending on the dimensions of the vehicle, between which there are a plurality of crossbars located transversally, and is characterised by the fact that the fixing between the long spars and the plurality of crossbars is made by means of screws, the inner face of each one of the long spars having been fitted with some tabs which are an integral part of the long spars and bent at a right angle to the long spar and which have openings by means of which the screw elements are fitted, thus allowing the coupling of the crossbars and the long spars and the crossbars are made from a galvanised sheet material.

Thanks to these characteristics, a chassis is obtained that both maintains the stability required for vehicles where they are assembled and is also advantageous on allowing a reduction of manufacturing costs for the metallic structure as the main components are fixed together by screws, thus avoiding the use of welding and allowing the use of galvanised materials that do not require surface treatments with paint and reduce the weight of the vehicle. In addition, the fact of not having used welding in the fixing of the elements that shape the structure, allows the complete structure to be sent disassembled as its assembly and dismantling is very simple, in such a way that it occupies less space in the transport stage.

It is important to highlight that the invention has been thought out for a chassis in which the spars and crossbars are arranged on the same horizontal plane, this meaning, the longitudinal spars are crossed by the crossbars by means of some through openings.

Said crossbars include steel strips onto which the container rests, said steel strips having a 'U' shaped section where the grooved section has a width corresponding to the width of the spars.

By preference, the crossbars have a profile that has a noticeably 'C' shape with the ends being fitted with flanges facing each other that give greater rigidity and resistance to bending efforts.

In accordance with another aspect of the chassis of the invention, both spars have a 'C' shaped profile defining two transversal extensions at the upper and lower ends, the crossbar having a height equal to the height defined by the two transversal extensions of the spar.

Other characteristics and advantages of the transport vehicle chassis object of the invention will be clear from the description of a preferred embodiment of the invention and the drawings that are attached, but are not exclusive, which are by way of illustration and not by way of limitation, in which:

### BRIEF DESCRIPTION OF THE DRAWING

Figure 1. - Is a perspective view of a chassis for a conventional transport vehicle in accordance with the present invention.
Figure 2: - Is a detailed perspective view of the area of the joint of the spar with one of the crossbars shown with a circle on the previous figure;
Figure 3. - Is a detailed perspective view of one end of a crossbar, shown with a circle on figure 1
Figure 4. - Is a side cross view corresponding to the previous figure;
Figure 5. - Is a side cross view of a crossbar in the area of the coupling to a spar of the structure; and
Figure 6. - Is a perspective view corresponding to one end of the spar.

### DESCRIPTION OF A PREFERRED EMBODIMENT

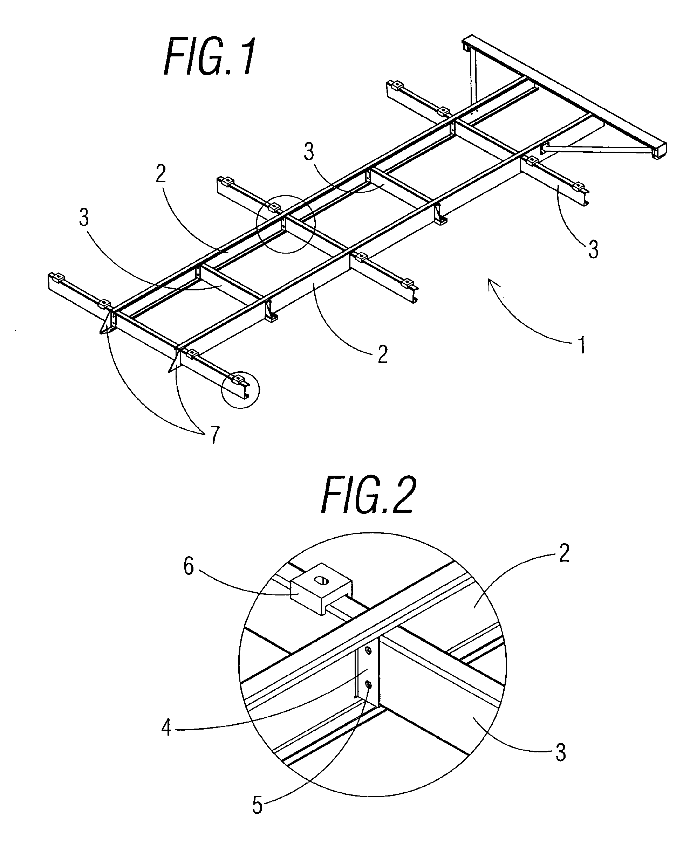

As and how shown in figure 1, one embodiment of the transport or load vehicle chassis is made up from a metallic structure referenced in a general way by means of reference (1) that is used to support an upper conventional container (not represented as it is not the object of the invention), said structure (1) being made from two longitudinal spars (2) with a 'C' shaped profile separated from each other at a distance and in a parallel manner between them there are a plurality of crossbars (3) of differing lengths located transversally and in the same horizontal plane as the spars (2), which are supported on some extensions to the profiles of the spars (2), preventing the inertia produced by side movements or curves turning the spars over hence it is referred to as a modular structure.

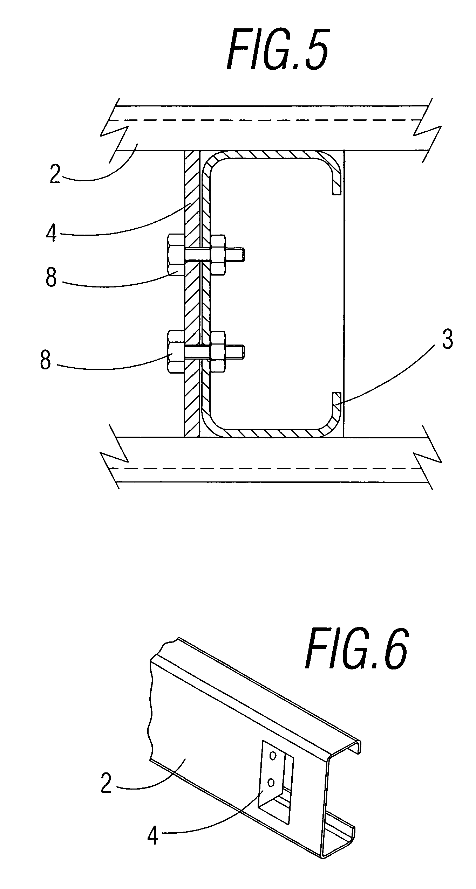

The fixing between said spars (2) and the plurality of crossbars (3) is advantageously by means of bolted elements, the inner face of each one of the spars (2) being fitted with some tabs (4) bent at a right angle to the spar (2) that have openings (5) (see figure 2 for greater clarity) through which bolted elements (8) are fitted (see figure 5), such as screws and fixing nuts that are available in the market, thus allowing the coupling of the crossbars (3) and in which the spars (2) and the crossbars (3) are made of galvanised sheet material as not using welding for the fixing of same. The tabs (4) form a complete part with the spars (2) and therefore do not use any additional elements for the fixing of the spars (2) to the crossbars (3). It should be stated that the spar (2) has a 'C' shaped profile defining two transversal extensions at the upper and lower ends (see figure 6), the crossbar (3) having a height equivalent to the distance defined by the two transversal extensions of the spar (2), in such a way that the crossbar (3) is adjusted between the two transversal extensions of the spar in such a way that the bolting elements receive less working forces and it is the said extensions that work from the resistance point of view to guarantee the stability of the vehicle. In turn, the described structure (1) is equally fixed to the vehicle chassis by bolting elements.

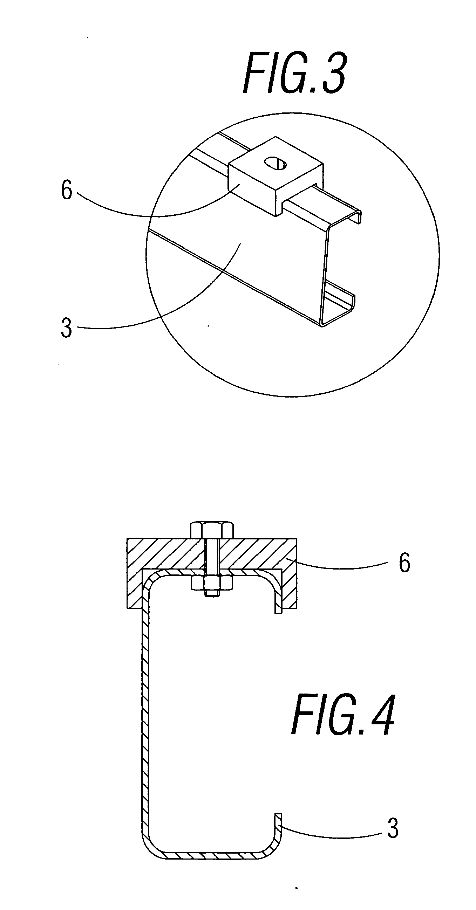

The crossbars (3) also include some steel strips (6) onto which the container will rest, said steel strips (6) having a 'U' shaped section in which the grooved section has a width corresponding to the width of the spar (2). These steel strips (6) are fixed to the crossbars (3) by means of bolts that cross an elongated hole located on the steel strip and a third fixing bolt (represented in figure 4).

The crossbars (3) have a noticeably 'C' shaped profile with the ends being fitted with flanges facing each other (see figures 3 and 4) that contribute greater rigidity.

At the rear end of each one of the spars (2) of the structure a termination can be seen that is formed by a bolted triangular shaped profile plate (7).

It is not considered necessary to extend the description any further as any expert in the matter can understand the scope of the invention.

The details, shapes, sizes and other accessorial elements, likewise the materials used in the manufacture of the transport vehicle chassis of the invention can be suitably substituted for others that are technically equivalent and do not diverge from the essential characteristics of the invention or the scope defined in the claims that will be included below.

## Claims

1. A transport vehicle chassis that is made up of a metallic structure (1) that supports an upper container or body, said structure being formed by a pair of long spars (2) separated from each other, between which there are a plurality of crossbars (3) located transversally and in the same horizontal plane of the spars (2), and **characterised in that** the fixing between the spars and the plurality of crossbars is made by means of bolts (8), the inner face of each one of the long spars (2) having been fitted with some tabs (4) which are an integral part of the spars (2) and bent at a right angle to the spars (2) and which have openings by means of which the bolt elements are fitted, thus allowing the coupling of the crossbars (3) and the long spars (2) and the crossbars (3) are made from a galvanised sheet material.

2. A transport vehicle chassis according to Claim 1, **characterised in that** the crossbars (3) include steel strips (6) in the upper part onto which the container rests, said steel strips (6) having a 'U' shaped section in which the grooved section has a width corresponding to the width of the spar (2).

3. A transport vehicle chassis according to Claim 1, **characterised in that** the crossbars (3) have a profile noticeably with a 'C' shape into the ends of which flanges are fitted that face each other.

4. A transport vehicle chassis according to Claim 1, **characterised in that** the spars (2) have a 'C' cross section defining two transversal extensions in the upper and lower ends, the crossbar (3) having a height equivalent to the distance defined by the two transversal extensions of the spar (2).
